# EUROPEAN PATENT APPLICATION

(11) **EP 3 203 362 A1**
(43) Date of publication of application: **09.08.2017**
(21) Application number: 15847887.5
(22) Date of filing: 29.09.2015
(51) Int. Cl.: G06F 3/0484, A63F 13/55, G06F 3/16

(54) **USER INTERFACE DEVICE, PROGRAM, AND CONTENT NOTIFICATION METHOD**

(30) Priority: 29.09.2014 JP 2014198907
(71) Applicant: NTT DOCOMO, INC., Chiyoda-ku Tokyo 100-6150 (JP)
(72) Inventor: KURISU, Toshiharu, Tokyo 100-6150 (JP); SASAKI, Maki, Tokyo 153-0042 (JP)
(74) Representative: Hoffmann Eitle
(86) International application number: PCT/JP2015/077512
(87) International publication number: WO 2016/052501

(57) **Abstract**

A user interface device according to the present invention includes: acquisition unit acquisition unit (111) that acquires content to be notified by a character image, the character image interacting with a user when the character image is displayed on a screen; display control unit (112) that displays on the screen the character image performing a particular action when the acquired content is categorized as a particular type; and notification unit (113) that notifies the user of the content categorized as the particular type, when input is received from the user when the character image is performing the particular action, by way of the character image.

## Description

### Technical Field

The present invention relates to user interfaces employing character images.

### Background Art

In the art of user interfaces, techniques are known for interacting with character images, such as avatars. The use of such user interfaces is widely deployed in various electronic devices such as game consoles, smart phones, and personal computers. Patent Document 1 discloses a technique for generating an action or a facial expression in a character image in which the character imparts a sense of confidence or enthusiasm to a proposal item when a search and present for information is conducted.

### Citation List

### Patent Literature

Patent Document 1: JP2001-249949A1

### Summary of Invention

### Technical Problem

The prior art suffers from a draw back in that when information is imparted to a user by way of a character image, it is done so in a uniform, mechanical manner.

It is an object of the present invention to provide a natural user interface that imparts to a user a similar feeling to that experienced during interaction with other humans.

### Solution to Problem

In the present invention, there is provided a user interface device including: an acquisition unit that acquires content to be notified by a character image, the character image interacting with a user when the character image is displayed on a screen; a display control unit that displays on the screen the character image performing a particular action when the acquired content is categorized as a particular type; and a notification unit that notifies the user, when input is received from the user when the character image is performing the particular action, the content categorized as the particular type by way of the character image.

The display control unit may vary an appearance of the character image or an object displayed together with the character image in accordance with a type of the content.

The display control unit may vary a manner in which the character image performs the particular action depending on the acquired content categorized as the particular type.

When the acquired content is categorized as a type other than the particular type, the display control unit may display the character image in a manner different from that used when the content categorized as particular type is acquired.

The user interface device may include a location specifying unit that specifies a location of the user interface device, and the content categorized as the particular type may be associated with a particular location; and the display control unit may display the character image performing the particular action when the content categorized as the particular type is acquired, the content being associated with the particular location, and the location specified by the location specifying unit and the particular location satisfy a predetermined condition.

The input may include an input entered by an operation other than voice and an input entered by voice; and the notification unit may restrict content to be notified when the input is entered by the operation.

The acquisition unit may acquire a plurality of items of content categorized as the particular type; the input may include an input entered by an operation other than voice and an input entered by voice; and the notification unit may vary content to be notified depending on whether the input is entered by the operation or voice.

The display control unit may control a timing of a subsequent display of a character image performing the particular action depending on a location where the input is received, a time and date when the input is received, or a content notified by the input.

In the present invention, there is also provided a program for causing a computer to execute the steps of: acquiring content to be notified by a character image, the character image interacting with a user when the character image is displayed on a screen; displaying on the screen the character image performing a particular action when the acquired content is categorized as a particular type; and notifying the user of the content categorized as the particular type, when input is received from the user when the character image is performing the particular action, by way of the character image.

In the present invention, there is further provided a method of notifying content comprising: acquiring content to be notified by a character image, the character image interacting with a user when the character image is displayed on a screen; displaying on the screen the character image performing a particular action when the acquired content is categorized as a particular type; and notifying the user of the content categorized as the particular type, when input is received from the user when the character image is performing the particular action, by way of the character image.

### Effects of Invention

According to the present invention, it is possible to provide a natural user interface that imparts to a user a similar feeling to that experienced during interaction with other humans.

### Brief Description of the Drawings

Fig. 1 is a block diagram showing a configuration of information distribution system 10.
Fig. 2 is a block diagram showing a hardware configuration of user terminal 100.
Fig. 3 is a block diagram showing a hardware configuration of distribution device 200.
Fig. 4 is a diagram showing an example of a screen on which a character image is displayed.
Fig. 5 is a diagram showing an example of a screen on which a character image is displayed.
Fig. 6 is a block diagram showing a functional configuration regarding a display control of user terminal 100.
Fig. 7 is a flow chart showing an example of processing of notification.

### Description of Embodiments

### Exemplary Embodiment

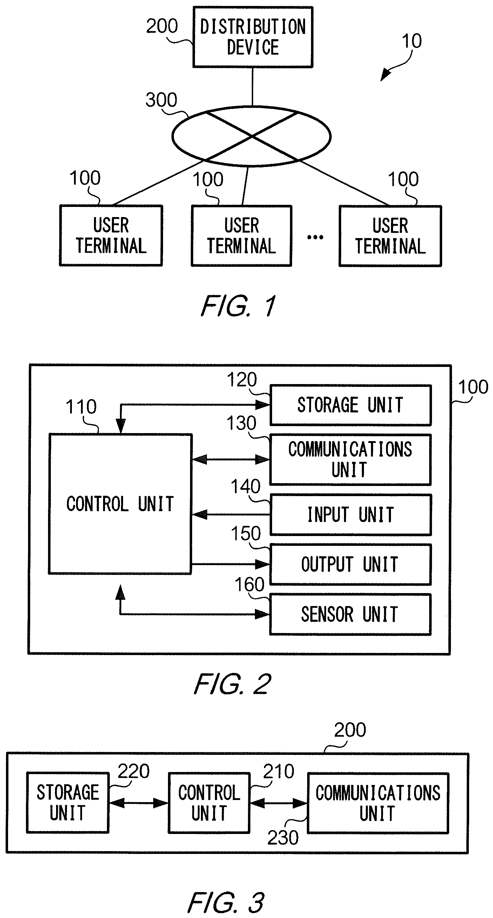

Fig. 1 is a block diagram showing a configuration of information distribution system 10 according to an exemplary embodiment of the present invention. Information distribution system 10 is a computer system for distributing content to user terminals 100. Information distribution system 10 includes a plurality of user terminals 100 and distribution device 200, which are connected via network 300. Network 300 is, for example, the Internet or a mobile communication network.

The content is information that is represented by, for example, a character, an image, a sound, or the like. The content may also be referred to as digital content. The content in this exemplary embodiment is, for example, weather information (e.g., a weather forecast, or a weather warning); information on a facility such as a restaurant; or information relating to an event (or a festival) such as a concert or an exhibition. Some content may be associated with a predetermined location. It is to be noted that the content may be any data as long as the data has a format that can be read on a display of user terminal 100, including content such as that of a web page. In this exemplary embodiment, the content includes that which enables interaction with a user.

User terminal 100 is an electronic device owned and carried by a user. User terminal 100 is an example of a user interface device according to the present invention. User terminal 100 typically is a smart phone, tablet or the like. However, user terminal 100 is not limited to such device. In this exemplary embodiment, user terminal 100 has a voice agent function. The voice agent function referred to herein is a function for receiving voice input to user terminal 100, so as to assist a user of user terminal 100 in various operations or functional settings in user terminal 100. For example, by employing synthesized speech, the voice agent function enables information such as a content of a web page to be read aloud, or for the user to receive voice prompts for performing an input operation.

The voice agent function in this exemplary embodiment is performed by way of a character image displayed on user terminal 100. As used here, the character image may be, for example, an avatar that consists of an image representative of a cartoon character, a celebrity, an animal, or the like. The character image may be three-dimensional in form represented by a polygon. The voice agent function performed by way of the character image allows a user to input information into user terminal 100 by interacting with user terminal 100 as if the user is actually talking to a human. It is to be noted that the character image in this exemplary embodiment is displayed on a standby screen (or home screen) of user terminal 100.

Fig. 2 is a block diagram showing a hardware configuration of user terminal 100. User terminal 100 includes control unit 110, storage unit 120, communications unit 130, input unit 140, output unit 150, and sensor unit 160.

Control unit 110 is a means for controlling the operation of the units of user terminal 100. Control unit 110 includes an arithmetic processing unit, such as a Central Processing Unit (CPU) and an application processor, and a memory (main memory). Control unit 110 controls the operation of the units of user terminal 100 by executing programs. The programs executed by control unit 110 include an application program for realizing the above-described voice agent function. The application program also has a function to control display of a character image.

Storage unit 120 is a means of storing data. Storage unit 120 includes a storage medium, such as a flash memory. The storage medium can be attached to user terminal 100. Storage unit 120 is capable of storing data required for the operation of control unit 110, and content received from the distribution device.

Communications unit 130 is a means for transmitting and receiving data via network 300. Communications unit 13 includes a baseband processor and an antenna. Communications unit 13 performs modulation and demodulation according to network 300 when data is transmitted and received. Communications unit 13 receives content from distribution device 200 via network 300.

Input unit 140 is a means for receiving input of data. Input unit 140 includes a keypad and microphone. When a display unit includes a touch-screen display, input unit 140 may include a sensor portion of the touch-screen display. In the following description, of a plurality of input received at input unit 140, input entered by an operation of the keypad or touch-screen display is referred to as "operational input," and input entered using the microphone is referred as "voice input."

Output unit 150 is a means for outputting data. Output unit 150 includes a display unit that includes a liquid crystal display or other display, and a speaker. The display unit may include a touch-screen display as described above.

Sensor unit 16 is a means for detecting a change in status of user terminal 100 and a user. Sensor unit 16 includes a plurality of sensors. For example, sensor unit 16 includes a Global Positioning System (GPS) module that detects a location of user terminal 100. Sensor unit 160 may also include an acceleration sensor that detects acceleration in a movement of user terminal 100 and a gyroscope that detects an inclination of user terminal 100. Sensor unit 160 may also be capable of detecting the environment around user terminal 100, such as temperature, atmospheric pressure, humidity, and illuminance (brightness), or may measure a heart rate of the user by use of a heart-rate sensor.

Distribution device 200 is a server device for distributing content. Distribution device 200 stores a plurality of items of content, and transmits user-specific content to user terminals 100. The content stored in distribution device 200 may be created and provided by, for example, a third party business (a content provider).

Fig. 3 is a block diagram showing a hardware configuration of distribution device 200. Distribution device 200 includes control unit 210, storage unit 220, and communications unit 230. It is to be noted that the function of distribution device 200 may be achieved by cooperation between a plurality of server devices, rather than by reliance on a single device.

Control unit 210 is a means for controlling the operation of the units of distribution device 200. Control unit 210 includes an arithmetic processing unit, such as a CPU, and a memory. Control unit 210 is capable of distributing content selected for each user at a predetermined timing by executing a program for controlling distribution of content to the user.

Storage unit 220 is a means for storing data. Storage unit 220 includes a storage medium, such as a hard disk. Storage unit 220 stores data required for the operation of control unit 210, and content to be distributed to user terminals 100.

Communications unit 230 is a means for transmitting and receiving data via network 300. Communications unit 230 transmits content to user terminals 100. In addition, communications unit 230 may also receive new content from an external server device or other devices, as required.

The configuration of information distribution system 10 is as described above. The voice agent function allows user terminal 100 to assist the user in various operations (e.g., a search for information, or functional settings in user terminal 100), or to perform various notifications by voice. The user is able to perform the operations by speaking to user terminal 100.

User terminal 100 is capable of outputting (e.g., display) content. For example, user terminal 100 displays a list showing available content on a predetermined screen (a screen other than the standby screen), and outputs content selected by the user from the list showing available content. In this case, the user is required to perform an operation to display the predetermined screen in order to view the content. In the following description, such a manner of outputting content is referred to as a "first manner."

As an alternative to the first manner, user terminal 100 may employ another output manner to output content, in which content recommended to the user is notified by display of a character image. In the following description, this output manner is referred to as a "second manner." The second manner enables a user to be aware of the existence of content to be notified when the standby screen is displayed. In this point the second manner is different from the first manner. That is, in the case of the first manner, the user is required to perform an operation to view content intentionally; while in the case of the second manner, the user is made aware of the existence of content to be notified by holding user terminal 100 by merely viewing a screen that is initially displayed.

In this exemplary embodiment, content is categorized as any one of a plurality of types. Four types of content are used herein: "recommendation;" "question;" "chat;" and "others." However, the content may be categorized as a type other than these four types. The types may include a type of content that is output only in either the first manner or the second manner.

In this case, content corresponding to an attribute of a user (e.g., age, gender; a location frequented by the user, a hobby, and a preference), namely content expected to be of interest to the user is categorized as the type "recommendation". For example, if the user is interested in music, content for notifying details of an upcoming concert may be categorized as the type "recommendation" in user terminal 100 used by this user.

Content for prompting interaction by the user with user terminal 100 is categorized as the type "question" or "chat." Among these types of content, content representing a question that is output to acquire information from the user (e.g., an attribute of the user) is categorized as the type "question." More specifically, the content to be categorized as the type "question" includes information for asking a question such as "do you like sports?" and "when is your birthday?" to prompt the user to provide an answer. User terminal 100 may reflect information acquired in response to such a question when extracting or categorizing content.

Content that is not intended for acquisition of information is categorized as the type "chat," which is different from the content to be categorized as the type "question." More specifically, content for outputting an utterance such as a greeting "good morning" or "it's a fine day (it's raining) today" to the user is categorized as the type "chat." Although the user is not required to respond to an utterance output from user terminal 100, the user may input a general response such as "right."

Content categorized as none of the above three types is categorized as the type "others." The same content may be categorized as the type "recommendation" or as the type "others," depending on an attribute of the user. For example, content for notifying a user of details of an upcoming concert may be categorized as the type "recommendation" for a user who is interested in music; while the content is categorized as the type "others" for a user who is not interested in music.

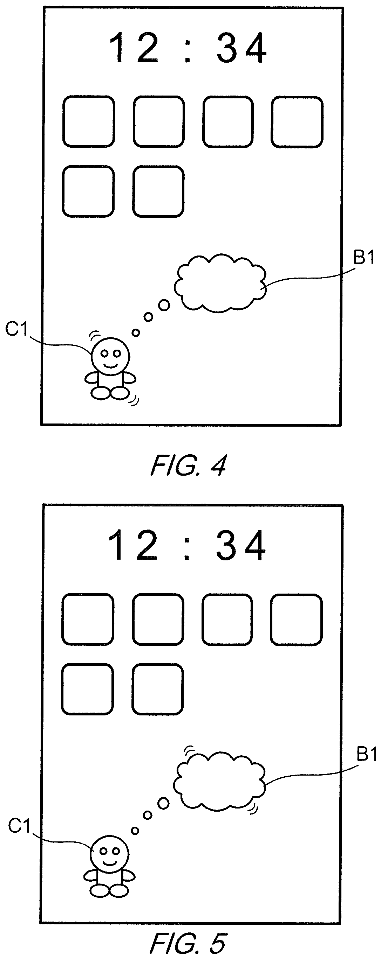

Figs 4 and 5 are diagrams each showing an example of a screen on which a character image is displayed. When there is content to be recommended to the user, user terminal 100 causes character C1 to perform a particular action. In the example shown in FIG. 4, the particular action is a shaking action performed by character C1 (as if character C1 wants to tell the user something). In the following description, a manner of a display of a character image that performs the particular action is referred to as a "particular display manner." It is to be noted that a specific example of the particular display manner is not limited to this example. In this particular display manner, the character image may perform an action such as moving between two predetermined points, or frequently changing a facial expression of the character image. Alternatively, in this particular display manner, the character image may be displayed with a particular facial expression, or the character image may move its mouth (as if the character image wants to tell the user something).

In this exemplary embodiment, the display of the character image in the particular display manner may be performed only when there is content to be recommended to the user. If there is no content to be recommended to the user, user terminal 100 displays the character image in a manner that is different from the above particular display manner, such as displaying the character image standing still. Alternatively, user terminal 100 may not display any character image when there is no content to be recommended to the user.

Additionally, user terminal 100 displays speech balloon B1 near character C1 in the particular display manner. Speech balloon B1 is an example of an object displayed together with a character image. Inside speech balloon B1, the part or summary of content represented by a text character, an image, etc. may be displayed. It is to be noted that as shown in FIG. 5, only speech balloon B1 may move to perform the particular action in the particular display manner. Alternatively both speech balloon B1 and character C1 may move to perform the particular action in the particular display manner.

User terminal 100 performs the display of the character image in the particular display manner for content having a particular type; while user terminal 100 does not performs the display of the character image in the particular display manner for content having another type. In this exemplary embodiment, user terminal 100 performs the display of the character image in the particular display manner when content is categorized as a type "recommendation;" while user terminal 100 does not performs the display of the character image in the particular display manner for content categorized as another type. It is to be noted that the particular type as used herein (namely, a type corresponding to the display of the character image in the particular display manner) may be set by the user.

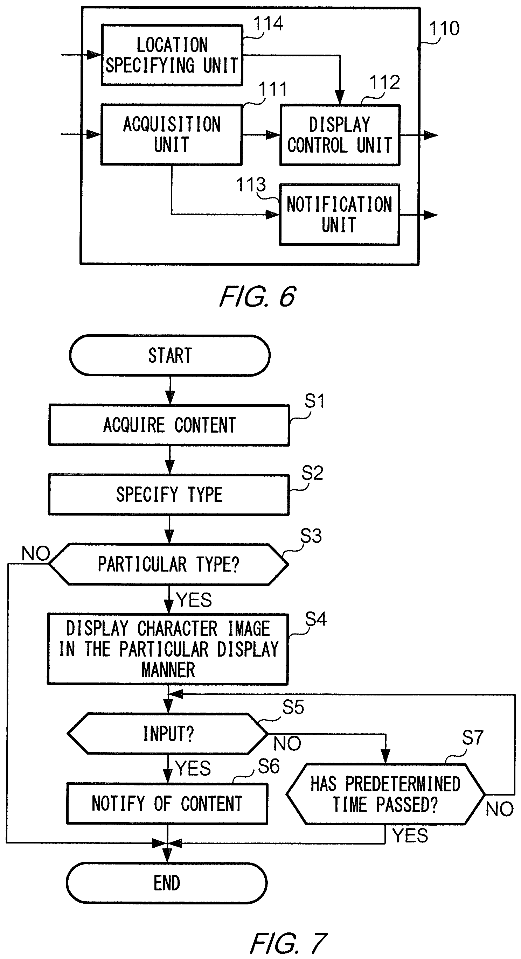

FIG 6 is a functional block diagram showing a functional configuration regarding a display control of user terminal 100. Control unit 110 of user terminal 100 realizes, by executing a predetermined program, functions corresponding to acquisition unit 111, display control unit 112, notification unit 113, and location specifying unit 114, which are now described below.

Acquisition unit 111 is a means for acquiring content. Acquisition unit 111 acquires content from distribution device 200 via network 300. In addition, acquisition unit 111 may acquire content to be displayed that is generated in user terminal 100, or that is stored in user terminal 100. For example, content to be categorized as the type "question" or "chat" may be stored in user terminal 100 in advance, or may be generated in user terminal 100 based on a location of the user or a date and time. It is to be noted that acquisition unit 111 may repeatedly acquire content at intervals, or may acquire a plurality of items of content at the same time (e.g., together).

Display control unit 112 is a means for controlling a display of a character image. When there is an object displayed together with the character image, display control unit 112 also controls a display of the object. Display control unit 112 controls the display of the character image based on the content acquired by acquisition unit 111. Specifically, when the content acquired by acquisition unit 111 is categorized as the particular type (in this example, "recommendation"), display control unit 112 displays the character image in the particular display manner.

Notification unit 113 is a means for notifying content. Specifically, predetermined input is received from the user while the character image is displayed in the particular display manner, notification unit 113 notifies the user of the content that is acquired by acquisition unit 111 and that is categorized as the particular type. The predetermined input as used herein may be an operational input (e.g., an operation to tap the character image) or may be voice input. For example, when the user utters a predetermined term (such as "what happened?") while the character image is displayed in the particular display manner, notification unit 113 may perform an operation to recognize this term and to notify the user of content.

When notifying content categorized as the particular type, notification unit 113 performs the notification by way of the character image. For example, when the content includes a word, notification unit 113 may read aloud the content using a synthetic voice associated with the character image. Alternatively, notification unit 113 may display the content in a speech balloon as if the character image is uttering the word. Alternatively, notification unit 113 outputs a message such as "would you like to play content?" in the voice of the character image to prompt the user to enter input (a response).

Location specifying unit 114 is a means for specifying a location of user terminal 100. In this exemplary embodiment, user terminal 100 is carried by the user. Therefore, the location of the user terminal 100 will be the same as a location of the user. Location specifying unit 114 acquires location information (latitude and longitude) from the GPS module of sensor unit 160, thereby specifying the location. It is to be noted that a method of specifying a location in the present invention is not limited to a method using the GPS.

Display control unit 112 may control a timing at which the character image is displayed in the particular display manner, based on the location specified by location specifying unit 114. For example, display control unit 112 may display the character image in the particular display manner only at a predetermined location (e.g., a place such as the vicinity of a user's home, set by the user in advance). When content to be notified is associated with the particular location, display control unit 112 may display the character image in the particular display manner when the location specified by location specifying unit 114 and the location associated with the content satisfy a predetermined condition. For example, when content relating to a restaurant is to be notified, display control unit 112 may display the character image in the particular display manner when the user is located near the restaurant (namely, a distance between the location associated with the content and the location of the user is smaller than or equal to a predetermined threshold).

Fig. 7 is a flowchart showing an example of processing of a notification by a character image. When control unit 110 of user terminal 100 acquires content (step S1), control unit 110 specifies a type of the content (step S2). Control unit 110 determines whether the type is a particular type (in this example, "recommendation") (step S3).

When the acquired content is categorized as the particular type, control unit 110 displays the character image in the particular display manner (step S4). That is, control unit 110 displays the character image that performs the particular action in this step. Meanwhile, when the acquired content is categorized as a type other than the particular type, control unit 110 terminates the processing of notification without displaying the character image in the particular display manner. That is, in this case control unit 110 does not perform the notification of the content by way of the character image.

It is of note here that when the acquired content is categorized as a type other than the particular type, although control unit 110 does not perform the notification of the content by way of the character image, control unit 110 may display the character image on the standby screen. Additionally, the content may be output in the above first manner even if the acquired content is not categorized as the particular type.

After the character image performing the particular action is displayed, control unit 110 waits for input to be entered by the user. That is, control unit 110 determines whether predetermined input is received (Step S5). Upon receiving the input, control unit 110 notifies the user of the content (step S6). Until the predetermined input is received, control unit 110 determines whether a time that has passed from the start of the display of the character image in the particular display manner is greater than or equal to a predetermined threshold (step S7). The threshold may be, for example, about five to ten minutes. However, the threshold may be longer than ten minutes or shorter than five minutes. The threshold may vary depending on the content to be notified. Control unit 110 repeats the determination of step S5 until the predetermined time has passed. When no input is entered by the user until the predetermined time has passed, control unit 110 then terminates the processing of notification without notifying the user of the content.

Incidentally, while performing the processing of notification, control unit 110 does not have to continue to display the screen. Control unit 110 may temporarily hide the screen in accordance with an operation performed by the user, or when the user performs no operation for a certain period of time. In this case, control unit 110 continues to measure the time that has passed, regardless of whether the screen is displayed or hidden. Control unit 110 may generate a time lag between the acquisition of the content (step S1) and the display of the character image (step S4).

According to the above-described exemplary embodiment, the display of the character image in the particular display manner is performed only for content categorized as the particular type. This enables the user to recognize the existence of some content (but not all content) from the appearance of the character image. Additionally, this exemplary embodiment also prevents notification of content to the user unconditionally, namely unilaterally. This eliminates a negative feeling that may be experienced by the user when content is notified unilaterally. According to this exemplary embodiment, it is possible to notify content according to the status of the user, namely at a timing that the user desires.

Further, in this exemplary embodiment, user terminal 100 performs an operation such that the character image asks the user via the appearance of the character image whether the notification of content categorized as the particular type is allowed. Such notification is performed when the user performs an action to view the standby screen. Thus, performance of the notification contrary to the user's intentions is prevented, in contrast to a notification by sound or vibration. Interaction with the user in this manner allows the user to communicate via an interactive natural interface in a similar manner to that experienced when interacting with humans (not mechanical interaction).

### Modification

The present invention is not limited to the above exemplary embodiment. In the following description, another embodiment of the present invention will be described. It is to be noted that the present invention may be carried out in an embodiment in which the above exemplary embodiment and at least one modification are appropriately combined.

### (1) Type of content

In the present invention, a plurality of particular types of content, namely a plurality of types of content that is the subject of the display in the particular display manner, may be used. In this case, user terminal 100 may vary the appearance of a character image or speech balloon depending on the type of content. This enables the user to recognize the type of content merely by viewing the character image, and to decide in advance whether to view the content. When content to be notified by a character image varies over time, user terminal 100 may vary the appearance of the character image or speech balloon to accord with the variation in the content.

User terminal 100 may record the type of content that is selected from at least one item of content that is the subject of the display in the particular display manner, and that is actually notified, to be reflected on the subsequent display. For example, user terminal 100 may notify with priority content that is categorized as a type viewed by the user most frequently.

### (2) Variation of particular display manner

User terminal 100 may vary the particular display manner depending on content. For example, user terminal 100 may vary a movement of a character image depending on data capacity of content such that the character image moves more noticeably as the data capacity of the content increases. User terminal 100 may extract a character string from content and analyze the character string, to display a character image appropriate to the analysis result. Alternatively, when content to be notified is information on a restaurant, user terminal 100 may display an object that suggests the details of the content, such as a knife and fork, together with a character image.

### (3) Utilization of recommendation level

User terminal 100 may calculate a degree of recommendation (hereinafter referred to as a "recommendation level") to a user for content to be notified. For example, the recommendation level may be calculated based on an attribute of the user, time and date, location, or other factors. User terminal 100 may vary a timing of the display in the particular display manner, or vary the particular display manner depending on the recommendation level. Alternatively, user terminal 100 may vary the threshold used in step S7 depending on the recommendation level, such that the threshold increases as the recommendation level increases.

### (4) Utilization of schedule information

User terminal 100 may acquire information on a schedule of a user. For example, user terminal 100 may acquire information on the schedule of the user from an application program known as a scheduler. User terminal 100 may control a timing of the display in the particular display manner based on the information on the schedule of the user. For example, user terminal 100 may perform the display in the particular display manner during a period of time when no schedule is registered by the user (namely, a period of time when the user will have time to spare).

### (5) Input method

User terminal 100 may vary the subsequent operation depending on whether a kind of input entered by a user is operational input or voice input while the character image is displayed in the particular display manner. For example, when the input performed by the user is operational input, user terminal 100 may display content; while when the input entered by the user is voice input, user terminal 100 may output content by voice. This prevents a problem that user terminal 100 outputs sound in a situation where speech is hesitant. In addition, when there is a plurality of items of content to be notified, user terminal 100 may vary content to be notified according to whether a kind of input entered by the user is operational input or voice input.

When the input entered by the user is operational input, user terminal 100 may determine that there could be another person proximate to the user, and thus restrict content to be notified. In such a case, user terminal 100 may notify a predetermined content, such as information that is private to the user, only when input entered by the user is voice input. User terminal 100 may not notify the predetermined content when the input entered by the user is operational input.

### (6) Utilization of information dependent on a date and time when and a location where input is entered

User terminal 100 may control a timing of a subsequent display of the character image in the particular display manner based on a location or on a date and time at which input is received from the user while the character image is displayed in the particular display manner. For example, when user terminal 100 determines that a location or a date and time at which the input is received from the user follows a certain trend, such that it can be inferred that there is a location where or a period of time when content is often notified, user terminal 100 may perform the display of the character image in the particular display manner at the location or during the period of time. Alternatively, when a plurality of items of content are to be notified, user terminal 100 may vary a timing of the display of the character image in the particular display manner depending on whether content is categorized as a type viewed by the user frequently or another type.

The user interface device according to the present invention is not limited to above user terminal 100, namely a smart phone or tablet device. The display control device according to the present invention may be, for example, a game console, a portable music player, or a personal computer.

In the present invention there may be provided, in addition to a user interface device (or an electronic device including the user interface device), an information distribution system including the user interface device and distribution device, a program causing a computer (e.g., CPU) to function as the user interface device, and a method of notifying content. The program may be provided by being stored in a recording medium, such as an optical disk, or may be downloaded onto a predetermined device via a network, such as the Internet, and installed for use on the device.

### Reference Signs List

- 10: Information distribution system
- 100: User terminal
- 110: Control unit
- 120: Storage unit
- 130: Communications unit
- 140: Input unit
- 150: Output unit
- 160: Sensor unit
- 111: Acquisition unit
- 112: Display control unit
- 113: Notification unit
- 114: Location specifying unit
- 200: Distribution device
- 300: Network

## Claims

1. A user interface device comprising:
an acquisition unit that acquires content to be notified by a character image, the character image interacting with a user when the character image is displayed on a screen;
a display control unit that displays on the screen the character image performing a particular action when the acquired content is categorized as a particular type; and
a notification unit that notifies the user, when input is received from the user when the character image is performing the particular action, the content categorized as the particular type by way of the character image.

2. The user interface device according to Claim 1, wherein the display control unit varies an appearance of the character image or an object displayed together with the character image in accordance with a type of the content.

3. The user interface device according to Claim 1 or 2, wherein the display control unit varies a manner in which the particular action is performed depending on the acquired content categorized as the particular type.

4. The user interface device according to any one of Claims 1 to 3, wherein when the acquired content is categorized as a type other than the particular type, the display control unit displays the character image in a manner different from that used when the content categorized as particular type is acquired.

5. The user interface device according to any one of Claims 1 to 4, further comprising a location specifying unit that specifies a location of the user interface device, and wherein:
the content categorized as the particular type is associated with a particular location; and
the display control unit displays the character image performing the particular action when the content categorized as the particular type is acquired, the content being associated with the particular location, and the location specified by the location specifying unit and the particular location satisfy a predetermined condition.

6. The user interface device according to any one of Claims 1 to 5, wherein:
the input includes an input entered by an operation other than voice and an input entered by voice; and
the notification unit restricts content to be notified when the input is entered by the operation.

7. The user interface device according to any one of Claims 1 to 5, wherein:
the acquisition unit acquires a plurality of items of content categorized as the particular type;
the input includes an input entered by an operation other than voice and an input entered by voice; and
the notification unit varies content to be notified depending on whether the input is entered by the operation or voice.

8. The user interface device according to any one of Claims 1 to 7, wherein the display control unit controls a timing of a subsequent display of a character image performing the particular action depending on a location where the input is received, a time and date when the input is received, or a content notified by the input.

9. A program for causing a computer to execute the steps of:
acquiring content to be notified by a character image, the character image interacting with a user when the character image is displayed on a screen;
displaying on the screen the character image performing a particular action when the acquired content is categorized as a particular type; and
notifying the user of the content categorized as the particular type, when input is received from the user when the character image is performing the particular action, by way of the character image.

10. A method of notifying content comprising:
acquiring content to be notified by a character image, the character image interacting with a user when the character image is displayed on a screen;
displaying on the screen the character image performing a particular action when the acquired content is categorized as a particular type; and
notifying the user of the content categorized as the particular type, when input is received from the user when the character image is performing the particular action, by way of the character image.
